# EUROPEAN PATENT SPECIFICATION

(11) **EP 1 072 641 B1**
(45) Date of publication and mention of the grant of the patent: **03.03.2004**
(21) Application number: 00306337.7
(22) Date of filing: 25.07.2000
(51) Int. Cl.: C08K 7/26, C08J 9/00, C08L 25/00, C08F 12/00

(54) **Polymer particles**
Polymerteilchen
Particules de polymère

(30) Priority: 26.07.1999 EP 99202459
(43) Date of publication of application: 31.01.2001
(73) Proprietor: Nova Chemicals (International) S.A., 1700 Fribourg (CH)
(72) Inventor: Berghmans, Michel Florentine Jozef, 3311 AR Dordrecht (NL); Mesters, Carolus Matthias Anna Maria, 1815 JC Alkmaar (NL); Metsaars, Alphonsus Catharina Gerardus, 5121 ZM Rijen (NL); Neijman, Eric Wilhelmus Johannes Frederik, 5142 MG Waalwijk (NL); Pallay, Jan, 3010 Kessel-Lo (BE)
(74) Representative: Harrison, David Christopher

(56) References cited:
- WO-A-98/01489
- DE-A- 19 610 330
- US-A- 4 500 673
- US-A- 5 068 294
- US-A- 5 073 610
- US-A- 5 244 926

## Description

The present invention relates to expandable polymer particles containing a polymer of a vinylarene monomer and a foaming agent and to a process for their preparation.

Particles that contain a polymer of a vinylarene monomer and a foaming agent are generally known as expandable polymers. A well-known expandable polymer is expandable polystyrene. Expandable polystyrene is produced on a commercial scale by suspension polymerisation. The foaming agent is usually a low-boiling hydrocarbon, such as a C₃₋₆ hydrocarbon, in particular pentane. The expandable polystyrene is used for making foamed articles that are produced by expanding the polystyrene particles. In the expansion process the foaming agent is (partially) released and may be emitted into the environment. Such emissions are regarded undesirable and ways are sought to reduce the amount of hydrocarbon foaming agent.

In DE 196 10 330 the use of zeolites in polymer foams, such as polystyrene foams, is disclosed. Herein, zeolite is added to the molten polymer. The resulting mixture is heated to cause the crystal water of the zeolite to evaporate, thereby creating little gas nuclei. These nuclei serve to collect hydrocarbon foaming agent that is added to the composition. The actual expansion thus still requires the presence of a hydrocarbon foaming agent.

It was an object of the present invention to obtain expandable polymer particles containing a polymer of a vinylarene monomer, in which the amount of water that can be used as foaming agent is such that one may refrain from incorporating any amount of hydrocarbon foaming agent.

Surprisingly, it was found that this object can be achieved by a polymer particle, containing a porous silicate compound, which polymer particle contains at least 1.5% by weight of water.

Accordingly, the present invention relates to expandable polymer particles containing a polymer of a vinylarene monomer, a porous silicate compound in an amount capable of adsorbing at least 1.5% by weight of water as the foamin agent, and at least 1.5% by weight of water, based on the weight of vinylarene, water and porous silicate compound, wherein the porous silicate compound is selected from alumino silicates and amorphous silica particles.

Polymer particles according to the present invention have satisfactory expandability properties without the need to contain an organic foaming agent. They can be expanded to yield pre-expanded particles, which are optionally treated further to obtain foamed articles.

Suitable vinylarene monomers to be used in the present process are well known in the art and can suitably be selected from styrene, α-methylstyrene, chlorostyrene, dimethylstyrene, vinyltoluene and similar styrenic derivatives. Preferably, the vinylarene is styrene, optionally mixed with at most 50 wt % of any other vinylarene, based on the total amount of vinylarene incorporated in the final polymer. Most preferably, styrene is used as the sole monomer.

The porous silicate compound is selected from alumino silicates and amorphous silica particles.

Examples of alumino silicates are clays and zeolites. Clays are hydrated alumino silicates of the generalized formula Al₂O₃.SiO₂.H₂O. Examples are kaolinite, montmorillonite and bentonite.

Zeolites are substances well known in the art. Reference is made to e.g. D.W. Breck "zeolite molecular sieves", which contains extensive background on zeolites. The term "alumino silicate zeolite" is used to indicate a collection of crystalline, hydrated alumino silicates with small, uniform pores and a big inner surface. The empirical formula of these zeolites is M_{2/n}O.Al₂O₃.xSiO₂.yH₂O, wherein M is a cation, n is the cation valency, and x and y are the amount of respectively SiO₂ and crystal water molecules. Suitably, M is selected from group I or II elements in particular sodium, potassium, magnesium, calcium, strontium and barium. M may also be selected from ammonium, alkylammonium or hydrogen cations.

In the present invention, it is preferred to use alumino silicate zeolites having a Si/Al molar ratio of 1 to 30, preferably from 1 to 4. Particularly good results have been obtained with zeolite A wherein part of the sodium cations have been exchanged for calcium cations. Further good results have been obtained with zeolite Y in which part of the sodium cations have been exchanged by ammonium cations.

The porous silicate compound may also be an amorphous silica particle. Such compounds are suitably built from more than 95% by weight of SiO₂, more suitably from more than 98% by weight. Examples are compounds sold under the trade name "SIPERNAT" or "AEROSIL" by Degussa. Good results have been obtained with silica compounds having the trade name "SIPERNAT 50" and "SIPERNAT 50 S". They both contain 98.5% by weight SiO₂, based on the substance which has been dried for 2 hours at 2000°C. Also good results are obtained with "AEROSIL 200", which contains more than 99.8% by weight SiO₂, based on the substance which has been dried for 2 hours at 2000°C (AEROSIL is a trademark).

The average particle size of the porous silicate compound is thought to have an effect on the cell size and cell size distribution of the pre-expanded polymer particles and resulting foam. In this patent document, the average particle size is understood to be the value at which 50 volume % of the particles have a smaller particle size and 50 volume % of the particles have a bigger particle size, as measured by laser light diffraction using a Malvern Mastersizer Microplus apparatus. It is preferred to use a porous silicate compound having an average particle size of 50 µm or less, preferably from 0.1 µm to 40 µm, more preferably from 0.5 µm to 20 µm. The use of porous silicate compounds having an average particle size between the cited ranges results in foams having an improved strength, improved fusion and less shrinkage.

The porous silicate compound should be present in the polymer particles of the current invention in an amount capable of adsorbing at least 1.5% by weight of water. Typically, the amount used is from 0.1 to 10% by weight, based on the weight of vinylarene, water and porous silicate compound. Preferably, the amount is from 0.5 to 5% by weight. If the amount of porous silicate compound is too low, the water-adsorbing capacity of the resultant particle may remain unsatisfactorily low. If the amount is too high, the mechanical properties of the foamed article, made from the resultant particles, may be adversely affected.

The amount of water present in the polymer particles of the current invention is at least 1.5% by weight, based on the weight of the vinylarene, water and porous silicate compound, as measured in accordance with the Karl Fischer method. Preferably, the amount is from 2 to 20% by weight, more preferably from 3 to 11% by weight. Such particles are expandable without the presence of a C₃₋₆ hydrocarbon foaming agent. This makes that the particles can contain less than 0.5% wt of a C₃₋₆ hydrocarbon, more preferably less than 0.25% wt, based on weight of the particle. Most preferably, the particles do not contain any C₃₋₆ hydrocarbon.

It will be appreciated that polymer particles according to the invention may further contain several additives or coatings in effective amounts. Such additives include dyes, fillers, stabilisers, flame retarding compounds, nucleating agents, anti-static compounds and lubricants. Of particular interest are coating compositions containing glycerol or metal carboxylates. Such compounds reduce the tendency of the particles to agglomerate. Suitable carboxylates are glycerol mono-, di- and/or tristearate and zinc stearate. Examples for such additive compositions are disclosed in GB-A-1,409,285. The coating compositions are deposited onto the particles via known methods, e.g., via dry-coating in a ribbon blender or via a slurry or solution in a readily vaporising liquid.

The particles advantageously have an average diameter of 0.1 to 6 mm, preferably from 0.4 to 3 mm.

In addition to the polymer particle per se, the present invention also relates to a process for the preparation of such polymer particles containing a polymer of a vinylarene monomer, which process includes:
(a) preparing a viscous mass containing 10-70% by weight, based on the total amount of vinylarene present, of a polymer of a vinylarene monomer, 90-30% by weight, based on the total amount of vinylarene present, of a vinylarene monomer, and a porous silicate compound;
(b) suspending the viscous mass thus obtained into an aqueous medium to yield suspended particles; and
(c) polymerising the suspended particles to complete monomer conversion.

Step (a) may be conducted in any known manner. One possible way could be mixing the components of step (a) in an extruder or another kind of mixer. However, it is preferred to obtain the viscous mass of step (a) by pre-polymerisation of vinylarene monomers to a conversion degree of 10 to 70% by weight, based on the weight of the vinylarene monomer present at the start of the polymerisation, and adding the porous silicate compound before, during or after the pre-polymerisation to the polymerisation mixture.

It is preferred to add a compound to the viscous mass that enhances the incorporation of porous silicate compound. If the viscous mass is obtained by pre-polymerisation, the extra compound is suitably added at the start of the pre-polymerisation. Suitable compounds may be metal persulphates such as potassium persulphate. Metal persulphates are suitably added in an amount of 100-150 ppm, based on the amount of vinylarene. Alternatively, an unsaturated compound containing polar groups may be added. Examples are maleic anhydride, unsaturated mono acids such as acrylic acid or methacrylic acid, or salts of an ester thereof or divinylbenzene. These compounds may optionally be further substituted with e.g. siloxane groups. They are used in an amount of 0.1 to 2% by weight, more preferably 0.5 to 2% by weight, based on vinylarene. The use of maleic anhydride is preferred.

The pre-polymerisation step may be conducted in any known manner. This includes anionic polymerisation, free-radical polymerisation and thermal polymerisation. The degree of monomer conversion can easily be controlled in thermal polymerisation by increasing or decreasing the temperature. Therefore, thermal polymerisation is preferred for the pre-polymerisation step. Preferably, the thermal polymerisation is effected by heating the solution to a temperature of 60 to 180°C, preferably from 110 to 130°C. When the desired conversion has been achieved the temperature is reduced and the polymerisation stops. It is most preferred to carry out the pre-polymerisation step by thermal polymerisation in the presence of a relatively small amount of free-radical initiator. A suitable amount is between 0.005 and 0.20% by weight of initiator, based on amount of vinylarene. It has been found that the presence of the small amount of initiator gives polymer particles of increased expandability.

Optimal conversion degrees of the pre-polymerisation may vary if different porous silicate compounds are used. Preferably, the conversion degree is from 10 to 70% of the vinylarene monomer, more preferably from 20 to 50%, most preferably from 25 to 40%. It is believed that due to the pre-polymerisation the mobility of the porous silicate compound in the pre-polymerised mass is reduced, thereby facilitating a fine distribution of the compound in the pre-polymerised mass. It is believed that by this fine distribution the water-uptake in the form of minute droplets is favored.

Subsequent to its preparation, the viscous mass is suspended in an aqueous medium. The volume ratio between the aqueous medium and the pre-polymerised mass may vary between wide ranges, as will be appreciated by a person skilled in the art. Suitable volume ratios include 1:1 to 1:5 (pre-polymerised mass:aqueous phase). The optimal ratio is determined by economic considerations. During the suspension step (b) and polymerisation step (c) water is incorporated into the viscous mass.

The aqueous medium suitably contains one or more conventional suspension stabilisers. Suitable suspension stabilisers are well known in the art and comprise poly(vinyl alcohol), gelatine, agar, polyvinyl pyrrolidine, polyacrylamide, inorganic stabilisers such as alumina, bentonite, or phosphates, like tricalciumphosphate and/or disodium hydrogen phosphate, optionally in combination with any of the stabilising compounds mentioned earlier. The amount of stabiliser may suitably vary from 0.1 to 0.9% wt, based on the weight of the aqueous phase. Any polymeric stabilising agent, e.g. polyvinyl pyrrolidone or hydroxyethyl cellulose, is essentially not taken up by the suspended pre-polymerised mass.

During the suspension polymerisation step (c), it may be advantageous to have a pH of the aqueous phase which is above 7, as measured at the temperature prevailing in the polymerisation mixture. In such cases, it might be desirable to add a buffering substance to adjust and maintain the pH above 7. The skilled person will appreciate which buffering compounds can be used. Suitably, a buffering amount of calcium hydroxide is added to the suspended polymerisation mixture.

The polymerisation step (c) is advantageously effected by free-radical polymerisation by means of a free-radical initiator. Thermal polymerisation is less preferred as it would need to be carried out at elevated pressure in view of the water present.

The free-radical initiators can be selected from conventional initiators for free-radical polymerisation. They include in particular organic peroxy compounds, such as peroxides, peroxy carbonates and peresters. Typical examples of these peroxy compounds are C₆₋₂₀ acyl peroxides, such as decanoyl peroxide, benzoyl peroxide, octanoyl peroxide, stearyl peroxide, peresters, such as t-butyl perbenzoate, t-butyl peracetate, t-butyl perisobutyrate, t-butyl(2-ethylhexyl) peroxycarbonate, hydroperoxides and dihydrocarbyl peroxides, such as those containing C₃₋₁₀ hydrocarbyl moieties, including di-isopropyl benzene hydroperoxide, di-t-butyl peroxide, dicumylperoxide or combinations thereof. Other initiators different from peroxy compounds are also possible, e.g., α,α'-azobisisobutyronitrile. The amount of radical initiator is suitably from 0.01 to 5% wt, based on the weight of the vinylarene monomer. The process is suitably initiated by heating the reaction mixture to elevated temperature, e.g. in the range of 60 to 140°C.

The polymerisation process of the step (c) may suitably be carried out in the presence of a chain transfer agent. The person skilled in the art will appreciate that these chain transfer agents can be selected from mercaptans, such as C₂₋₁₅ alkyl mercaptans, e.g. n-dodecylmercaptan, t-dodecylmercaptan, n-butylmercaptan or t-butylmercaptan. Preferred are aromatic compounds such as pentaphenylethane, and in particular the dimer of α-methylstyrene.

The free radical polymerisation is suitably carried out at a temperature of 60 to 140°C, preferably 80 to 120°C, and a pressure of 0.3 to 6.0 bar, preferably 2.5 to 4.0 bar.

It may be advantageous to polymerise the vinylarene monomers in the presence of other polymers such as polyphenylene oxide or elastomeric polymers. These other polymers may be added before or during step (a) and/or before, during or after step (c). Suitable polyphenylene oxides have been described in EP-A-350137, EP-A-403023 and EP-A-391499 (incorporated herein by reference). The polyphenylene oxide is preferably present in an amount of between 1 and 30 wt %, based on the amount of vinylarene monomers, and may improve the rigidity of the polyvinylarene polymer particles. Examples of suitable elastomeric polymers have also been described in EP-A-350137 and comprise (block) copolymers of vinyl substituted aromatic monomer and a conjugated diene monomer. These elastomeric polymers are preferably present in an amount of 0.5 to 10 wt %, based on the amount of vinylarene monomers, and may improve the impact strength of the polyvinylarene polymer particles.

The expandable particles can be pre-foamed by conventional methods, e.g. by using of superheated steam, hot air, heating in oil, or by microwaves to yield particles having a reduced density, e.g. from 15 to 140 kg/m³. It is preferred to pre-foam the particles according to the present invention by using a high frequency electric field.

The pre-foamed articles can be further converted into foamed articles in any conventional way.

The present invention also relates to foamed articles obtainable by the polymer particles according to the present invention.

The invention is now illustrated by the following examples.

### Example 1

An experiment was carried out using zeolite A as porous silicate compound, wherein part of the sodium ions were replaced by calcium ions (hereafter referred to as zeolite Ca-A). The Si/Al ratio of this zeolite was 1. The average particle size of the zeolite was 19 µm, as measured with laser light diffraction, using a Malvern Mastersizer Microplus.

Styrene (80 g), maleic anhydride (0.5% wt based on styrene in 5 g styrene) and zeolite Ca-A were stirred under nitrogen at room temperature in concentrations as set out in Table 1. By heating of the mixture to 120°C in 15 minutes and maintaining this temperature for 150 minutes, styrene is converted by thermal polymerisation. Subsequently, the reaction mixture was cooled to 70°C within 30 minutes. The styrene conversion was about 39%. A solution of 0.4% wt, based on styrene, dibenzoyl peroxide, and 0.2% wt, based on styrene, t-butyl perbenzoate in 5 g styrene was added and the mixture was homogenised at 70°C. The mixture was subsequently dispersed in 500 g water with 0.08% wt, based on water, hydroxyethyl cellulose and 0.45% wt, based on water, tricalcium phosphate. The suspension was heated for 240 minutes at 80°C, 60 minutes at 90°C and 120 minutes at 120°C to yield complete styrene polymerisation.

The resulting beads had a water content as given in Table 1, as measured in accordance with the Karl Fischer method.

Beads, having a density of about 1050 g/dm³, were exposed to high frequency electric heating. Hereto, 2 g of beads was placed on a lower horizontal electrode of an electrical circuit. A voltage of 3470 V and 38 MHz was used. The time of exposure was 15-20 seconds. Expansion of the beads with a particle diameter of 1.8-2.5 mm, resulted in a pre-expanded particles with a bulk density as indicated in Table 1.

### Example 2

Example 1 was repeated with the exception that zeolite Ca-A was replaced by zeolite Y, wherein part of the sodium ions were replaced by NH₄⁺ ions (hereafter referred to as zeolite NH₄⁺-Y). The Si/Al ratio of this zeolite was 2.5. The average particle size of the zeolite was 5 µm, as measured in accordance with the laser light diffraction method of Example 1.

During the suspension polymerisation, a buffering amount of calcium hydroxide was added in order to maintain the pH of the aqueous phase at about pH 12.

The results are shown in Table 1.

### Example 3

Example 1 was repeated with the exception that zeolite Ca-A was replaced by amorphous silica particles of the type "SIPERNAT 50", which contained 98.5% by weight of SiO₂. The average particle size was 39 µm, as measured in accordance with the laser light diffraction method of Example 1.

The results are shown in Table 1.

**TABLE 1**

| **Porous Silicate Compound** | **Added Concentration of Porous Silicate Compound (%wt**^{**1**}**)** | **Water Content in Resulting Polystyrene Particle (%wt**^{**2**}**)** | **Bulk Density (kg.m**^{**3**}**) Pre-expanded Particles** |
|---|---|---|---|
| Zeolite Ca-A | 1 | 5.6 | 122 |
| | 2 | 7.4 | 67 |
| | 3 | 9.2 | 65 |
| | 5 | 11.0 | 47 |
| | 10 | 18.7 | 52 |
| Zeolite NH₄⁺-Y | 1 | 10.6 | 60 |
| SIPERNAT 50 | 1 | 3.6 | 171 |
| | 2 | 5.2 | 81 |
| | 3 | 7.0 | 54 |
| | 5 | 7.5 | 39 |

| | | | |
|---|---|---|---|
| ¹ based on styrene | | | |
| ² based on the amount of vinylarene, water and porous silicate compound | | | |

### Example 4

Styrene (3000 g), polystyrene (1000 g), potassium persulphate ("KPS", 120 ppm based on styrene and polystyrene) and silica particles of the type "SIPERNAT 50" (2% wt, based on styrene and polystyrene) were stirred under nitrogen at room temperature. By heating the mixture to 90°C in 30 minutes, and maintaining this temperature for 60 minutes, styrene was converted by thermal polymerisation. Subsequently, the reaction mixture is cooled to 60°C within 20-30 minutes. The total amount of styrene polymer in the reaction mixture was 30% wt. A solution of 0.3% wt, based on styrene, dibenzoyl peroxide, and 0.2% wt, based on styrene, t-butyl (2-ethylhexyl) peroxycarbonate in 60 g styrene was added and the mixture was homogenised at 60°C. The mixture was subsequently dispersed in 4000 g water with 0.3% wt, based on water, hydroxyethyl cellulose and 0.2% wt, based on water, tricalcium phosphate. The suspension was heated for 240 minutes at 93°C and 120 minutes at 120°C to yield complete styrene polymerisation.

The water content and silica content of the resulting beads are set out in Table 2. The water content was measured in accordance with the Karl Fischer method. The silica content was measured by weighing 20 g polystyrene particles at room temperature, subjecting these 20 g polystyrene particles to 600°C until ashes of a constant weight were obtained, and again weighing the ashes at room temperature. For the amount of tricalcium phosphate in the ashes was corrected with a complexometric titration with EDTA.

### Example 5

Styrene (4000 g), maleic anhydride (0.5% wt based on styrene) and t-butyl(2-ethylhexyl) peroxycarbonate (1 g) were mixed. By heating the mixture to 120°C in 30 minutes and maintaining this temperature for 60 minutes, styrene is converted. Subsequently, the reaction mixture is cooled to 60°C within 20-30 minutes. The styrene conversion is about 30%. A solution of 0.3% wt, based on styrene, dibenzoyl peroxide, and 0.2% wt, based on styrene, t-butyl (2-ethylhexyl) peroxycarbonate in 60 g styrene was added and the mixture was homogenised at 60°C. The mixture was subsequently dispersed in 4000 g water. The suspension polymerisation was the same as described for Example 4.

The water content and silica content of the resulting particles were measured in accordance with the methods set out for Example 4. The results are set out in Table 2.

### Example 6

Example 4 was repeated with the exception that no potassium persulphate was added.

The water content and silica content of the resulting particles were measured in accordance with the methods set out for Example 4. The results are set out in Table 2.

**TABLE 2**

| **Example** | **Silica Content of Final Resulting Particle**^{**1**} | **Water Content of Resulting Particle**^{**1**} |
|---|---|---|
| 4 | 0.48% wt | 3.17% wt |
| 5 | 1.72% wt | 8.32% wt |
| 6 | 0.21% wt | 1.73% wt |

| | | |
|---|---|---|
| ¹ based on the amount of vinylarene, water and porous silicate compound | | |

## Claims

1. Expandable polymer particles containing a polymer of a vinylarene monomer and a foaming agent, **characterised in that** the particles further contain a porous silicate compound, selected from alumino silicate and amorphous silica particles, in an amount capable of adsorbing at least 1.5% by weight of water as the foaming agent, where the expandable polymer particles comprise at least 1.5% by weight of water based on the weight of vinylarene, water and porous silicate compound.

2. Exapandable polymer particles according to claim 1, wherein the porous silicate compound is selected from clays and alumino silicate zeolites.

3. Expandable polymer particles according to claim 2, wherein the porous silicate compound is selected from alumino silicate zeolites having a Si/Al ratio of 1 to 30.

4. Exapandable polymer particles according to claim 1, wherein the porous silicate compound is selected from amorphous silica particles that are built from more than 95% by weight of SiO₂.

5. Expandable polymer particles according to anyone of the preceding claims wherein the average particle size of the porous silicate compound is 50 µM or less.

6. Expandable polymer particles according to anyone of the preceding claims which contain from 0.1 to 10% by weight of porous silicate compound, based on the weight of vinylarene, water and porous silicate compound.

7. A process for the preparation of an expandable polymer particle as described in claim 1, which process includes:
(a) preparing a viscous mass containing 10 to 70% by weight, based on a total amount of vinylarene present, of a polymer of a vinylarene monomer, 90 to 30% by weight, based on the total amount of vinylarene present, of a vinylarene monomer, and including the incorporation of a porous silicate compound in the viscous mass;
(b) suspending the viscous mass thus obtained into an aqueous medium to yield suspended particles; and
(c) polymerising the suspended particles to complete the monomer conversion.

8. Process according to claim 7, wherein the viscous mass of step (a) is obtained by pre-polymerisation of vinylarene monomers to a conversion degree of 10 to 70% by weight, based on the weight of the vinylarene monomer present at the start of the polymerisation, and adding the porous silicate compound before, during or after the pre-polymerisation to the polymerisation mixture.

9. Process according to claim 8, wherein potassium persulphate or maleic anhydride is added to the viscous mass.

10. Foamed articles obtainable from the expandable polymer particle as defined in any one of claims 1 to 6.

## Patentansprüche

1. Schäumbare Polymerteilchen, die ein Polymer eines Vinylaren-Monomers und ein Treibmittel enthalten, **dadurch gekennzeichnet, dass** die Teilchen weiters eine aus Aluminiumsilikat und amorphen Siliziumdioxidteilchen ausgewählte poröse Silikatverbindung in einer Menge enthalten, die fähig ist, zumindest 1,5 Gew.-% Wasser als Treibmittel zu adsorbieren, worin die schäumbaren Polymerteilchen zumindest 1,5 Gew.-% Wasser, bezogen auf das Gewicht von Vinylaren, Wasser und poröser Silikatverbindung, umfassen.

2. Schäumbare Polymerteilchen nach Anspruch 1, worin die poröse Silikatverbindung aus Tonen und Aluminiumsilikat-Zeolithen ausgewählt ist.

3. Schäumbare Polymerteilchen nach Anspruch 2, worin die poröse Sifikatverbindung aus Aluminiumsilikat-Zeolithen mit einem Si/Al-Verhältnis von 1:30 ausgewählt ist.

4. Schäumbare Polymerteilchen nach Anspruch 1, worin die poröse Silikatverbindung aus amorphen Siliziumdioxidteilchen ausgewählt ist, die aus mehr als 95 Gew.-% SiO₂ gebaut sind.

5. Schäumbare Polymerteilchen nach einem der vorangegangenen Ansprüche, worin die mittlere Teilchengröße der porösen Silikatverbindung 50 µm oder weniger beträgt.

6. Schäumbare Polymerteilchen nach einem der vorangegangenen Ansprüche, die 0,1 bis 10 Gew.-% poröse Silikatverbindung, bezogen auf das Gewicht von Vinylaren, Wasser und poröser Silikatverbindung, enthalten.

7. Verfahren zur Herstellung eines schäumbaren Polymerteilchens nach Anspruch 1, wobei das Verfahren Folgendes umfasst:
(a) das Herstellen einer viskosen Masse, die 10 bis 70 Gew.-%, bezogen auf die Gesamtmenge an vorhandenem Vinylaren, eines Polymers eines Vinylaren-Monomers, 90 bis 30 Gew.-%, bezogen auf die Gesamtmenge an vorhandenem Vinylaren, Vinylaren-Monomer enthält, und umfassend die Aufnahme einer porösen Silikatverbindung in die viskose Masse;
(b) das Suspendieren der so erhaltenen viskosen Masse in einem wässrigen Medium, was suspendierte Teilchen ergibt; und
(c) das Polymerisieren der suspendierten Teilchen bis zu vollständigem Monomerumsatz.

8. Verfahren nach Anspruch 7, worin die viskose Masse aus Schritt (a) durch Präpolymerisation von Vinylaren-Monomeren bis zu einem Umsatzwert von 10 bis 70 Gew.-%, bezogen auf das Gewicht des am Beginn der Polymerisation vorhandenen Vinylaren-Monomers, und Zugeben der porösen Silikatverbindung vor, während oder nach der Präpolymerisation zum Polymerisationsgemisch erhalten wird.

9. Verfahren nach Anspruch 8, worin der viskosen Masse Kaliumpersulfat oder Maleinsäureanhydrid zugegeben wird.

10. Geschäumte Produkte, die aus schäumbaren Polymerteilchen nach einem der Ansprüche 1 bis 6 erhältlich sind.

## Revendications

1. Particules d'un polymère dilatable contenant un polymère d'un monomère de vinylarène et un agent moussant, **caractérisées en ce que** les particules contiennent de plus un composé de silicate poreux sélectionné parmi alumino-silicate et particules de silice amorphe, en une quantité capable d'adsorber au moins 1,5% en poids d'eau en tant qu'agent moussant, où les particules de polymère dilatable comprennent au moins 1-5% en poids d'eau en se basant sur le poids du vinylarène de l'eau et du composé de silicate poreux.

2. Particules de polymère dilatable selon la revendication 1, où le composé de silicate poreux est sélectionné parmi des argiles et des zéolites d'aluminosilicate.

3. Particules de polymère dilatable selon la revendication 2, où le composé de silicate poreux est sélectionné parmi des zéolites d'alumino-silicate ayant un rapport Si/Al de 1 à 30.

4. Particules de polymère dilatable selon la revendication 1, où le composé de silicate poreux est sélectionné parmi des particules de silice amorphe qui sont construites à partir de plus de 95% en poids de SiO₂.

5. Particules de polymère dilatable selon l'une quelconque des revendications précédentes où la dimension moyenne de particules du composé de silicate poreux est de 50 µM ou moins.

6. Particules de polymère dilatable selon l'une quelconque des revendications précédentes qui contiennent de 0,1% à 10% en poids du composé de silicate poreux, en se basant sur le poids du vinylarène, de l'eau et du composé de silicate poreux.

7. Procédé pour la préparation d'une particule de polymère dilatable telle que décrite à la revendication 1, lequel procédé comprend
(a) la préparation d'une masse visqueuse contenant 10 à 70% en poids, en se basant sur une quantité totale du vinylarène présent, d'un polymère d'un monomère de vinylarène, 90 à 30% en poids, en se basant sur la quantité totale de vinylarène présent, d'un monomère de vinylarène et comprenant l'incorporation d'un composé de silicate poreux dans la masse visqueuse;
(b) la mise en suspension de la masse visqueuse ainsi obtenue dans un milieux aqueux pour donner des particules en suspension; et
(c) la polymérisation des particules en suspension pour terminer la conversion du monomère.

8. Procédé selon la revendication 7, où la masse visqueuse de l'étape (a) est obtenue par prépolymérisation de monomères de vinylarène à un degré de conversion de 10 à 70% en poids, en se basant sur le poids du monomère de vinylarène présent au début de la polymérisation et addition du composé de silicate poreux avant, pendant ou après la prépolymérisation, au mélange de polymérisation.

9. Procédé selon la revendication 8, où on a ajoute, à la masse visqueuse, du persulfate de potassium ou de l'anhydride maléique.

10. Article mousse obtenu à partir de la particule de polymère dilatable telle que définie dans l'une quelconque des revendications 1 à 6.
